# FASCICULE DE BREVET EUROPEEN

(11) **EP 3 732 004 B1**
(45) Date de publication et mention de la délivrance du brevet: **16.08.2023**
(21) Numéro de dépôt: 18833067.4
(22) Date de dépôt: 27.12.2018
(51) Int. Cl.: B25J 19/00, B23Q 11/08

(54) **SÉCURISATION D'UNE ARTICULATION D'UN ROBOT**
SICHERHEITSSCHUTZ EINES ROBOTERGELENKS
SAFETY PROTECTION OF A ROBOT JOINT

(30) Priorité: 27.12.2017 FR 1763287
(43) Date de publication de la demande: 04.11.2020
(73) Titulaire: Softbank Robotics Europe, 75015 Paris (FR)
(72) Inventeur: MUGNIER, Fabien, 75015 PARIS (FR); CLERC, Vincent, 92140 CLAMART (FR); HONG, Robert, 75015 PARIS (FR)
(74) Mandataire: Atout PI Laplace
(86) Numéro de dépôt international: PCT/EP2018/097052
(87) Numéro de publication internationale: WO 2019/129828

(56) Documents cités:
- EP-A1- 1 122 039
- WO-A1-2017/015207
- FR-A1- 2 683 479
- JP-A- H0 283 192
- US-A- 4 848 179
- US-A- 4 904 514
- US-A1- 2008 237 921
- US-A1- 2014 090 506

## Description

L'invention concerne la sécurité d'utilisation d'un robot. Les robots sont destinés à interagir avec des humains et plus généralement avec leur environnement. D'une part, il est nécessaire de protéger l'environnement du robot vis-à-vis d'actions de ce dernier et d'autre part, le robot doit être protégé de son environnement.

Concernant la protection de l'environnement du robot, il est nécessaire d'éviter que les gestes des robots ne puissent blesser les humains ou détériorer les objets qui les entourent. Plus précisément, lors du mouvement de certaines articulations du robot, celui-ci pourrait pincer des humains ou des objets se trouvant à proximité. Par exemple, dans un robot à caractère humanoïde, lorsque le torse d'un robot se rapproche de son bassin, il y a risque de coincement entre le bassin et le tronc. De façon plus générale, le risque de coincement existe entre deux éléments du robot, articulés entre eux.

Plusieurs solutions ont été imaginées pour réduire le risque de coincement ou pour en limiter les conséquences. Pour éviter tout coincement, on peut limiter le débattement d'une articulation au moyen de butée permettant de conserver un écart suffisant entre les éléments reliés par l'articulation considérée. Cette solution limite les possibilités du robot en lui interdisant certains mouvements. Lorsqu'il s'agit d'un robot à caractère humanoïde, son anthropomorphisme se trouve alors dégradé.

Si l'on ne souhaite pas réduire le risque de coincement, il est tout de même possible d'en réduire les conséquences. A cet effet, on peut réduire l'effort produit par l'actionneur mouvant l'articulation considérée. Cette réduction d'effort limite aussi les possibilités du robot qui, par exemple, ne pourra plus soulever des charges importantes. Il est possible de limiter l'effort d'un actionneur uniquement en fin de course, lorsque les deux éléments se rapprochent. Cette limitation nécessite un pilotage complexe de l'actionneur. Ce pilotage est coûteux à mettre en oeuvre et peut être source d'une réduction de fiabilité du robot.

De plus, en cas de perte d'alimentation du robot, l'actionneur peut perdre toute retenue et l'articulation peut devenir totalement libre. Les éléments du robot reliés par cette articulation sont alors entraînés sous l'effet de la gravité qui peut produire des mouvements non maîtrisés de l'articulation. Des coincements peuvent intervenir lors de ces mouvements.

Par ailleurs, le robot peut contenir des sources de chaleur pouvant nuire à l'environnement du robot. Par exemple, le robot peut comprendre des moteurs ou des équipements électroniques susceptibles de chauffer lors de leur fonctionnement. Un utilisateur pourrait se brûler s'il peut accéder aux sources de chaleur sans protection. Pour éviter ce risque, le robot peut comprendre des coques rigides éventuellement munies d'écrans thermiques empêchant l'accès de l'utilisateur aux sources de chaleur. Cependant il est nécessaire d'évacuer la chaleur émise par le robot et la présence de coques rend plus difficile le refroidissement des sources de chaleur. De plus, pour les articulations, la présence de coques peut gêner les mouvements des éléments articulés ou tout au moins réduire leurs débattements.

Concernant la protection de composants du robot vis-à-vis de son environnement, le robot doit plus particulièrement être protégé contre l'insertion intentionnelle ou non d'objets susceptibles de l'endommager. A cet effet, les coques rigides peuvent former une solution préventive adaptée avec cependant les inconvénients cités plus haut.

Le document JP H02 83192 A, sur lequel repose le préambule de la revendication 1, décrit un robot industriel dans lequel les articulations sont protégées chacune par une enveloppe dont l'intérieur est maintenu en surpression. Les documents EP 1 122 039 A1, US 2014/090506 A1 et US 4 848 179 A décrivent des robots dont une articulation est recouverte d'une membrane flexible.

L'invention vise à améliorer la sécurité de fonctionnement d'un robot au moyen d'une solution complètement passive permettant de limiter le risque de coincement et / ou de pénétration d'objets dans une articulation. L'invention vise également à réduire le risque de contact avec des sources de chaleur internes au robot tout en facilitant son refroidissement. L'invention évite l'utilisation de coques rigides entourant une articulation.

A cet effet, l'invention a pour objet un robot comprenant :
- deux éléments mobiles entre eux,
- une articulation à au moins un degré de liberté reliant les deux éléments,
- un film souple et élastique entourant l'articulation et fixé à chacun des deux éléments, le film étant tendu entre un premier point de fixation sur le premier élément et un second point de fixation sur le second élément dans au moins une configuration des deux éléments, la tension du film variant en fonction d'une variation d'une distance séparant les deux points de fixation lors de mouvements de l'articulation autour de la configuration,
- une collerette entourant le premier des deux éléments et reliée au premier élément par l'intermédiaire d'une liaison pivot libre, dans lequel la fixation du film au premier élément est réalisée par l'intermédiaire de la collerette.

La présence d'un film permet d'isoler l'articulation de l'extérieur. Il est ainsi possible de la concevoir plus simplement. En effet, l'élasticité du film permet d'éviter des chaînes de cotes complexes nécessitées par des pièces mécaniques rigides assurant la protection de l'articulation. La mise en oeuvre d'un film permet notamment d'éviter la présence de jeux fonctionnels entre les différentes pièces mobiles entourant l'articulation. La mise en oeuvre d'un film permet également de réduire le poids du robot par rapport à la mise en oeuvre de coques rigides souvent beaucoup plus lourdes.

La tension du film est avantageusement sensiblement proportionnelle à la variation de distance séparant les deux points de fixation.

L'articulation est mobile en rotation autour d'un premier axe et avantageusement, un axe de rotation de la liaison pivot reliant la collerette au premier élément est confondu avec le premier axe.

Avantageusement une plage de débattement angulaire de l'articulation autour du premier axe est plus importante qu'une plage de débattement angulaire de la liaison pivot autour du premier axe.

L'articulation peut être mobile en rotation autour d'un premier axe et autour d'un second axe perpendiculaire au premier axe, un débattement angulaire de l'articulation autour du premier axe étant plus grand qu'un débattement angulaire de l'articulation autour du second axe. Un secteur angulaire autour du premier axe occupé par le film entre ses fixations est avantageusement plus grand qu'un secteur angulaire autour du second axe occupé par le film entre ses fixations.

Le film est avantageusement précontraint de façon à conserver une tension de part et d'autre de l'articulation sur au moins une partie d'une plage de débattement angulaire de l'articulation.

Le film est avantageusement un tissu qui peut comprendre une fibre à base de copolymère de polyéther et de polyuréa.

Le tissu est avantageusement respirant.

Le film comprend avantageusement un matériau isolant électrique et/ou un matériau conducteur électrique.

Le robot peut être à caractère humanoïde et comprendre un tronc et un bassin, l'articulation reliant le tronc et le bassin.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent deux exemples de robots pouvant mettre en oeuvre l'invention ;
les figures 2a et 2b représente le tronc et le bassin du robot de la figure 1b dans une configuration verticale ;
les figures 3a, 3b, 4a, 4b, 5a, 5b, 6a, 6b, 7a et 7b représentent le tronc et le bassin dans plusieurs configurations où le tronc s'incline ;

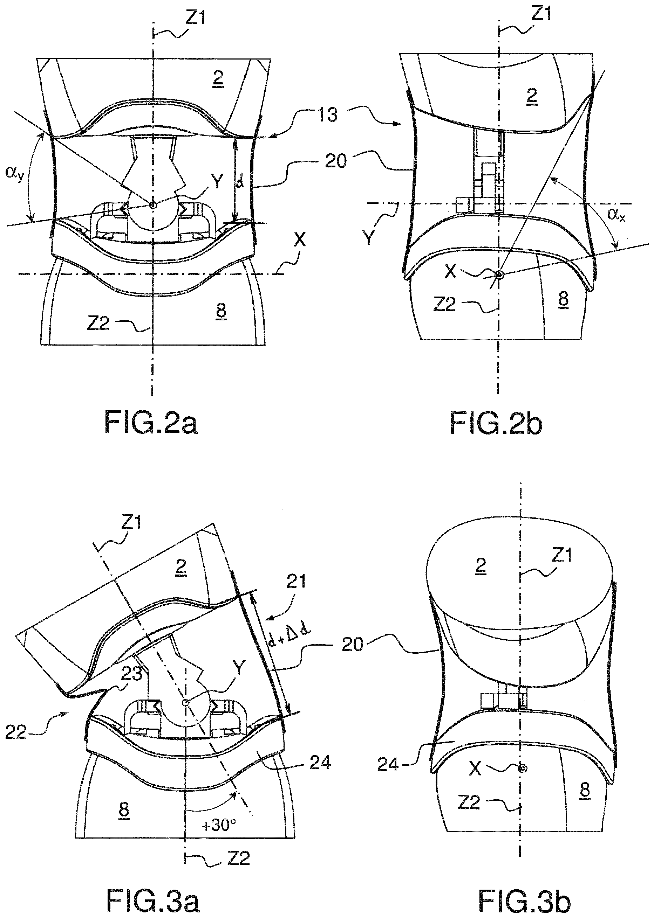

les figures 2a, 3a, 4a, 5a, 6a et 7a sont vues de face et les figures 2b, 3b, 4b, 5b, 6b et 7b sont vues de profil.

Par souci de clarté, les mêmes éléments porteront les mêmes repères dans les différentes figures.

La description détaillée de l'invention est faite en rapport à des robots à caractère humanoïde. Il est bien entendu que l'invention peut être mise en oeuvre pour d'autres types de robots, par exemple industriels. L'invention trouve une utilité dès qu'une articulation relie deux éléments du robot aptes à se mouvoir l'un par rapport à l'autre.

Un robot peut être qualifié d'humanoïde à partir du moment où il possède certains attributs de l'apparence et des fonctionnalités de l'homme comme par exemple une tête, un tronc, deux bras, deux mains, deux jambes ou deux pieds. Certains robots ne possédant que le haut du corps peuvent également être considérés comme possédant des caractères humanoïdes. Des robots humanoïdes sont capables de marcher ou de se déplacer sur une plateforme munie de roues, de faire des gestes, avec les membres ou avec la tête. La complexité des gestes qu'ils sont capables d'effectuer augmente sans cesse. L'interaction des robots avec leur environnement nécessite une sécurisation des gestes effectués. La sécurisation est nécessaire pour protéger le robot lui-même et pour protéger les personnes approchant le robot.

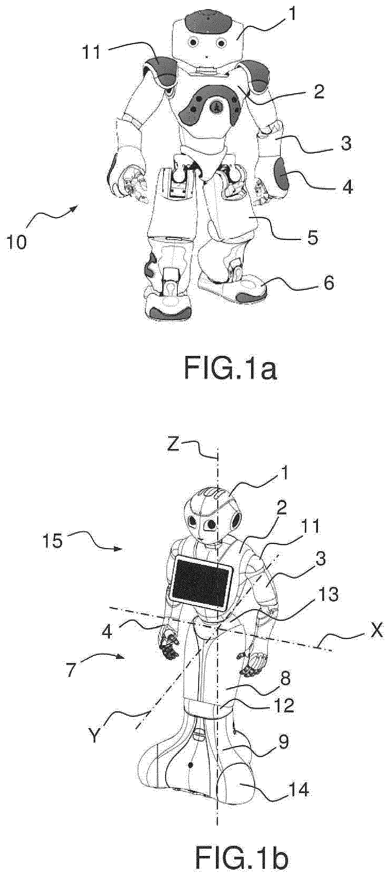

Les figures 1a et 1b représentent deux exemples de robots à caractères humanoïdes développés par la société demanderesse : Softbank Robotics Europe. Le robot humanoïde 10 représenté en figure 1a comprend une tête 1, un tronc 2, deux bras 3, deux mains 4, deux jambes 5 et deux pieds 6. Le robot humanoïde 15 représenté en figure 1b comprend une tête 1, un tronc 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les différentes articulations peuvent être motorisées. Les robots 10 et 15 comprennent par exemple une articulation 11 entre le tronc 2 et chacun des bras 3. L'articulation 11 formant une épaule du robot est motorisée autour de deux axes de rotation pour permettre de déplacer le bras 3 par rapport au tronc 2 à la manière des déplacements possibles par une épaule d'un être humain.

Le robot à caractères humanoïdes 10 comprend également plusieurs articulations pour mettre en mouvement les jambes du robot et reproduire le mouvement de la marche, en particulier des articulations assimilables à une hanche, entre le tronc et chacune des cuisses, à un genou, entre une cuisse et la jambe, et à une cheville entre la jambe et le pied. Plusieurs formes d'articulations motorisées sont mises en oeuvre, entraînant en mouvement l'un des membres selon un ou plusieurs degrés de liberté en rotation.

Le robot à caractères humanoïdes 15 présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe 7 comprend aussi une première articulation 12 s'apparentant à un genou, entre un bassin 8 et une jambe 9. Une deuxième articulation 13 s'apparentant à une hanche relie le tronc 2 et le bassin 8. L'articulation 13 possède au moins un degré de liberté en rotation notamment autour d'un axe X permettant d'incliner le tronc 2 du robot 15 vers l'avant ou vers l'arrière. L'axe X est un axe horizontal situé dans un plan frontal du robot 15. L'articulation 13 peut également permettre d'incliner le tronc 2 sur le côté en permettant au tronc 2 de pivoter autour d'un axe Y horizontal situé dans un plan sagittal du robot 15. Un troisième degré de liberté peut également être présent autour d'un axe vertical Z.

Un exemple de mise en oeuvre de l'invention est décrit au moyen de l'articulation 13 reliant le tronc 2 et le bassin 8 du robot 15. La motorisation de l'articulation 13 peut être assurée par autant de moteur que de degrés de liberté que possède l'articulation 13. Le ou les moteurs peuvent être situés dans l'articulation 13 elle-même ou peuvent être déportés dans le tronc 2 ou dans le bassin 8. D'autres articulations des robots 10 et 15 peuvent également mettre en oeuvre l'invention.

Les figures 2a et 2b représentent le tronc 2 et le bassin 8 du robot 15 dans une configuration verticale. Il est possible de définir un axe Z1 du tronc 2 et un axe Z2 du bassin 8. Les formes extérieures du robot 15 sont sensiblement symétriques entre elles par rapport à un plan sagittal du robot lorsque celui-ci est en configuration verticale. Dans cette configuration, les deux axes Z1 et Z2 sont dans le plan sagittal. De plus, les deux axes Z1 et Z2 sont alignés et le tronc 2 du robot 15 ne se penche ni sur l'avant ni sur l'arrière. Les axes Z1 et Z2 sont confondus avec l'axe Z précédemment défini.

Le robot 15 comprend un film 20 souple et élastique entourant l'articulation 13 et fixé à chacun des deux éléments : le tronc 2 et le bassin 8. Sur chacun des éléments, 2 et 8 dans l'exemple représenté, la fixation est réalisée sur une ligne entourant l'élément considéré. La fixation sur un des éléments peut se faire de façon continue le long de ligne ou de façon discontinue, c'est-à-dire en plusieurs points distincts de la ligne entourant l'élément considéré. Les points de fixation sont avantageusement répartis de façon uniforme le long de la ligne. Une fixation continue peut être réalisée de façon permanente ou de façon amovible permettant l'entretien du robot, notamment son nettoyage ou l'accès à l'articulation pour d'éventuels changements de composants. La fixation permanente peut être réalisée de façon continue par exemple par collage ou thermo soudage du film 20 sur l'élément ou de façon discontinue par exemple au moyen de rivets ou d'agrafes. La fixation amovible peut également être réalisée de façon continue par exemple au moyen d'une fermeture éclair, au moyen de crochets et boucles textiles communément appelées « scratch », par pincement entre des pièces mécaniques par exemple clipées le long d'une ligne entourant l'élément. La fixation amovible peut aussi être réalisée de façon discontinue par exemple au moyen de vis, de clips, de boutons régulièrement répartis le long d'une ligne entourant l'élément considéré. Le nombre de points de fixation peut être défini en fonction de la résistance mécanique du film 20 afin d'éviter qu'il ne se déchire sous l'effet de la tension se concentrant en chaque point de fixation. Tout autre moyen de fixation permanent ou amovible peut être mis en oeuvre dans le cadre de l'invention.

Dans la configuration verticale représentée sur les figures 2a et 2b, le film 20 est tendu entre ses fixations. Plus précisément, en choisissant deux points de fixation 16 et 17 du film 20, le point 16 étant sur le tronc 2 et le point 17 étant sur le bassin 8, autour de la configuration représentée sur les figures 2a et 2b, la tension du film 20 variant en fonction d'une variation de distance d séparant les deux points de fixation 16 et 17 lors de mouvements de l'articulation 13. Plus précisément, au moins lorsque la distance d augmente la tension du film 20, c'est-à-dire l'effort exercé par le film 20 sur chacun des deux points 16 et 17 augmente en première approche proportionnellement à l'allongement du film 20 entre les deux points 16 et 17. Le coefficient de proportionnalité peut, en première approche, être assimilé à un module d'Young du matériau du film 20. Autrement dit, la tension du film 20 est sensiblement proportionnelle à la variation de distance d. En pratique, le film 20 fait le tour de l'articulation 13, le film 20 est donc soumis principalement à des contraintes de traction orientées selon une direction joignant les deux points 16 et 17. Le film 20 est soumis à moindre mesure à des contraintes de traction orientées perpendiculaires aux contraintes principales ce qui peut altérer légèrement la proportionnalité de la tension du film 20 par rapport à la variation de distance d.

Dans la configuration verticale représentée sur les figures 2a et 2b, la tension du film 20 est équilibrée autour de l'articulation 13. Le film 20 forme une peau entourant l'articulation 13. Du fait de l'élasticité du film 20, lorsqu'un corps étranger au robot 15 tente de pénétrer entre le tronc 2 et le bassin 8 au niveau de l'articulation 13, le film 20 s'oppose à cette pénétration. Le corps étranger peut être une main d'un utilisateur. Le film 20 assure ainsi la protection de l'utilisateur. De même le corps étranger peut former un objet dangereux pour l'articulation 13. Le film 20 ralentit l'accès du corps étranger à l'articulation 13 qui s'en trouve alors protégée.

Les figures 3a et 3b représentent le tronc 2 et le bassin 8 du robot 15 dans une configuration où le tronc 2 du robot pivote vers la droite de 30°. Par convention la rotation se fait autour de l'axe Y de +30°. Dans cette configuration le film 20 se tend d'un côté 21 de l'articulation 13 et se détend de l'autre côté 22. Sur la figure 3a, le côté tendu 21 apparaît à droite et le côté détendu 22 à gauche. La distance d visible sur la figure 2a subit une augmentation de Δd lors de la rotation de +30°. Les caractéristiques mécaniques du film 20 sont définies en fonction de plages de débattement angulaire autour des axes X et Y et de la distance du film aux deux axes X et Y. Sur le côté tendu 21, le film 20 doit accepter un allongement dans son domaine élastique à l'extrémité de la plage de débattement. En revanche, sur le côté détendu 22, on peut admettre que le film 20 soit complètement détendu et forme même un pli 23. Plus précisément, dans la configuration verticale représentée sur les figures 2a et 2b, le film 20 peut être précontraint, c'est-à-dire en tension de part et d'autre de l'articulation 13. Autrement dit, avant son montage le film 20 est plus court que la distance séparant ses fixations. Lors de son montage, le film 20 est fixé sur un premier des deux éléments puis est déformé dans son domaine élastique pour atteindre sa ligne de fixation sur le second des deux éléments. Lorsque le tronc 2 pivote d'un côté, sur une première partie du débattement angulaire, le film 20 peut rester en tension de part et d'autre de l'articulation 13. Ensuite lorsque le tronc 2 s'incline au-delà de cette première partie du débattement, le film 20 peut se détendre complètement et donc former le pli 23. Cependant, il est préférable d'éviter que le pli 23 ne soit trop important. Il est même souhaitable d'éviter complètement le risque de formation d'un pli. A cet effet, le film 20 est précontraint de façon à conserver une tension sur toute la plage de débattement angulaire.

Le film 20 peut être formé en matériau élastique comme par exemple en caoutchouc ou en silicone. Le film 20 peut être formé de fibres qui peuvent être réparties de façon homogène. Alternativement, le film 20 peut être formé en tissus. Le tissage présente l'avantage de permettre des caractéristiques différentes selon les directions de la surface du film 20. Il est ainsi possible de prévoir des allongements maximum et des modules d'élasticité différents selon la direction des fibres. L'élasthanne est réputé pour son élasticité et peut être employé dans un tissu formant le film 20. L'élasthanne est par exemple formé d'un copolymère de polyéther et de polyuréa.

Le film 20 est maintenu à distance des composants internes de l'articulation. Le film 20 limite ainsi l'accès à ces composants par des éléments extérieurs au robot. Le film 20 participe ainsi à la protection du robot vis-à-vis de son environnement et à la protection de l'environnement lui-même aussi bien d'un point de vue mécanique, thermique et même électrique. Concernant l'aspect thermique, le film 20 peut être respirant et laisser passer l'air ce qui favorise les échanges thermiques entre le robot et son environnement afin de faciliter son refroidissement. Le film 20 peut également former un écran thermique protégeant ainsi le robot vis-à-vis de sources de chaleur extérieures susceptibles d'endommager l'articulation. Concernant l'aspect électrique, le film 20 peut être réalisé en matériau isolant protégeant aussi bien le robot que son environnement de risques liés au contact avec des potentiels électriques élevés. Alternativement ou en complément, le film 20 peut comprendre une couche ou des fibres conductrices permettant de réaliser un écran électrostatique ou électromagnétique.

Afin de limiter la formation de plis lorsque le tronc 2 s'incline, le robot 15 comprend une collerette 24 entourant un des éléments reliés par l'articulation 13 et par exemple le bassin 8. La collerette 24 est reliée au bassin 8 par l'intermédiaire d'une liaison pivot 25. La fixation du film 20 au bassin 8 est réalisée par l'intermédiaire de la collerette 24. Autrement dit, le film 20 est fixé à la collerette 24. Comme précédemment, la fixation du film 20 sur la collerette 24 peut se faire de façon continue ou discontinue.

La liaison pivot 25 est libre. Autrement dit, la liaison pivot 25 n'est pas motorisée. Lors de l'inclinaison du tronc 2 par rapport au bassin 8 autour de l'axe X, le film 20 entraîne la collerette 24 dans sa rotation par rapport au bassin 8. L'entraînement est dû au côté tendu du film 20 qui tire la collerette 24. Au contraire, le côté détendu du film 20 ne retient pas, ou retient moins la collerette 24. La rotation de la collerette 24 limite donc la formation de plis sur le côté détendu du film 20 lorsque le tronc 2 s'incline autour d'un axe parallèle à celui de la liaison pivot 25. Avantageusement, l'axe de la liaison pivot 25 et l'axe X sont confondus, afin d'obtenir une tension du film 20 régulièrement répartie lorsque le film 20 entraîne la collerette 24.

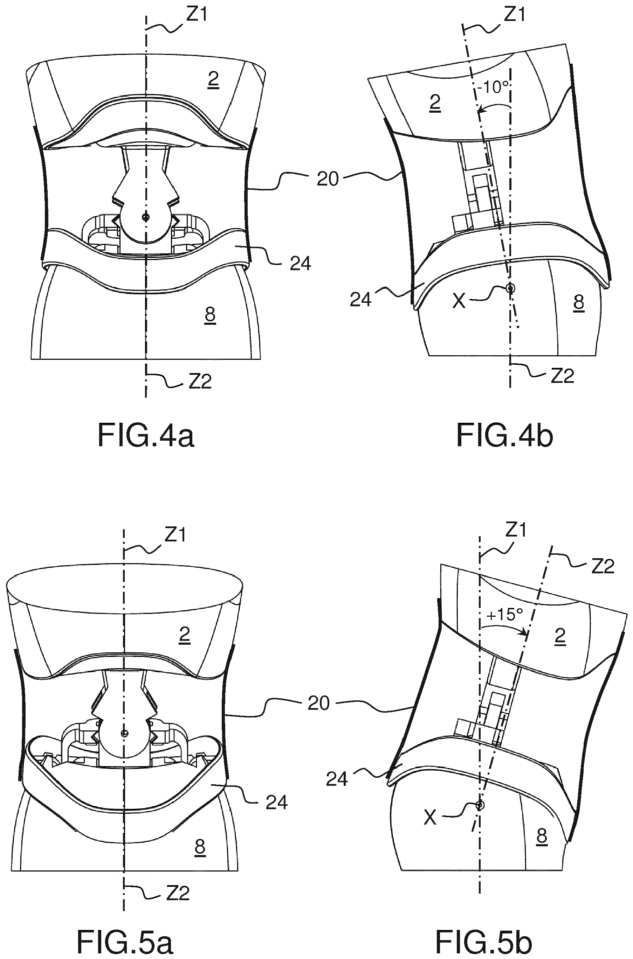

Les figures 4a et 4b d'une part et 5a et 5b d'autre part représentent deux configurations d'inclinaison du tronc 2, inclinaisons où la collerette 24 est entraînée par le film 20. Dans la configuration des figures 4a et 4b, le tronc 2 du robot pivote vers l'arrière de 10°. Par convention la rotation se fait autour de l'axe X de -10°. La collerette 24 pivote également de -10° autour de l'axe X. Dans la configuration des figures 5a et 5b le tronc 2 du robot 15 pivote vers l'avant de 15°. Par convention la rotation se fait autour de l'axe X de +15°. La collerette 24 pivote également de +15° autour de l'axe X. Dans ces deux configurations, le film 20 conserve la forme qu'il possède dans la configuration verticale représentée sur les figures 2a et 2b puisque la collerette 24 s'incline du même angle que le tronc 2. De façon plus générale cette forme conservée du film 20 reste identique pour toute inclinaison du tronc 2 autour de l'axe X de -10° à +15°.

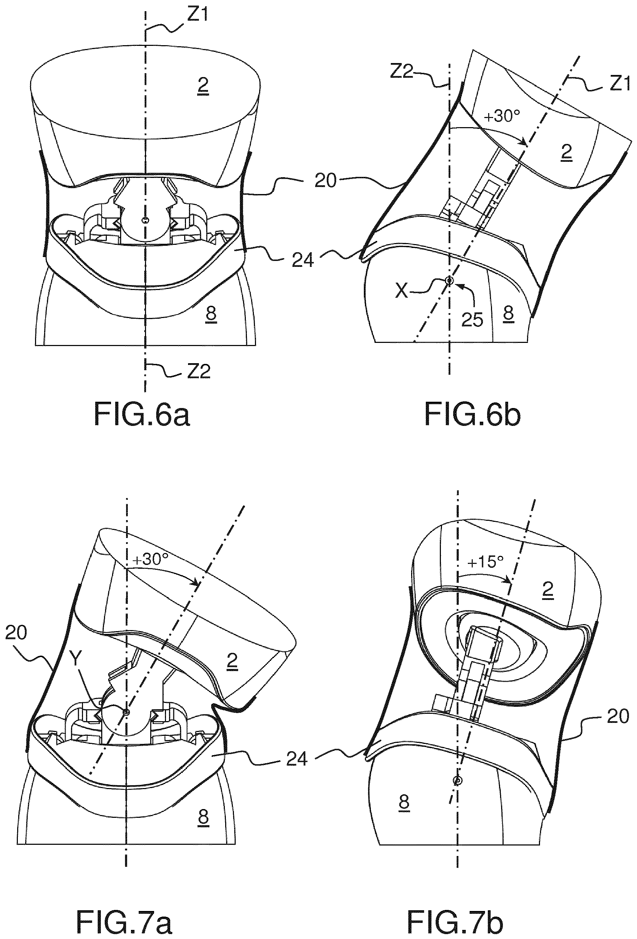

Le débattement angulaire maximum du tronc 2 autour de l'axe X est plus important que celui de la collerette 24. Le débattement angulaire de la collerette 24 est, dans l'exemple représenté limité à -10° et à +15° autour de l'axe X. Par contre, le tronc 2 peut s'incliner vers l'avant au-delà des +15° autour de l'axe X. La collerette 24 n'est pas obligatoire. Elle présente cependant l'avantage d'augmenter le débattement angulaire du tronc 2 avant la formation d'un pli dans le film 20. Les figures 6a et 6b représentent le tronc 2 et le bassin 8 du robot 15 dans une configuration où le tronc 2 du robot pivote vers l'avant de 30°. La collerette 24 est en butée et ne pivote que de +15° autour de l'axe X. La présence d'une collerette 24 pivotante permet au film 20 de conserver une forme limitant l'apparition de plis sur le côté détendu tout en autorisant un débattement angulaire important du tronc 2 par rapport au bassin 8.

Il est bien entendu possible de combiner les rotations autour des deux axes X et Y. Les figures 7a et 7b représentent le tronc 2 et le bassin 8 du robot 15 dans une configuration où le tronc 2 du robot pivote autour de l'axe X de +15° et autour de l'axe Y de +30°. La collerette 24 pivote également de +15° autour de l'axe X.

Une autre disposition du robot 15 est avantageusement mise en oeuvre pour limiter la formation de plis. Cette disposition peut être mise en oeuvre à la place ou en complément de la collerette 24. Plus précisément dans l'exemple représenté, pour la rotation autour de l'axe X dans la configuration verticale où les axes Z1 et Z2 sont alignés, comme représentée sur les figures 2a et 2b, le film 20 occupe un secteur angulaire α_{X} autour de l'axe X entre ses deux fixations l'une au tronc 2 et l'autre au bassin 8. De même, le film 20 occupe un secteur angulaire α_{Y} autour de l'axe Y entre ses deux fixations. Lorsque le film 20 se détend le secteur angulaire α_{X} se réduit et la réduction de longueur du film 20 entre ses deux fixations évolue en première approche proportionnellement à la réduction du secteur angulaire ou à son sinus. Il en est de même pour une extension du film 20. En conséquence, plus la plage angulaire de rotation souhaitée est importante autour d'une configuration au repos, plus le secteur angulaire occupé par le film 20 à sa position de repos doit être importante afin de maîtriser un rapport entre l'allongement de la longueur du film 20 et sa longueur elle-même.

Dans l'exemple représenté, le débattement angulaire autour d'une position verticale où les axes Z1 et Z2 sont alignée, est plus important autour de l'axe X vers l'avant : de 0° à 45°, que sur le côté autour de l'axe Y : 15° de part et d'autre de la position verticale. Afin de maîtriser l'allongement ou la réduction de longueur du film 20, un secteur angulaire autour de l'axe X occupé par le film 20 entre ses fixations est plus grand qu'un secteur angulaire autour de l'axe Y occupé par le film 20 entre ses fixations. Au repos, dans la configuration représentée sur les figures 2a et 2b, le secteur angulaire α_{Y} est de 45° et le secteur angulaire α_{X} est de 53°. Cette caractéristique entraîne une forme gauche des lignes sur lesquelles sont positionnées les fixations du film 20, d'une part sur le tronc 2 et d'autre part sur la collerette 24.

## Revendications

1. Robot comprenant :
• deux éléments (2, 8) mobiles entre eux,
• une articulation (13) à au moins un degré de liberté reliant les deux éléments (2, 8),
• un film (20) souple et élastique entourant l'articulation (13) et fixé à chacun des deux éléments, le film (20) étant tendu entre un premier point de fixation (16) sur le premier élément (2) et un second point de fixation (17) sur le second élément (8) dans au moins une configuration des deux éléments (2, 8), la tension du film (20) variant en fonction d'une variation (Δd) d'une distance (d) séparant les deux points de fixation (16, 17) lors de mouvements de l'articulation (13) autour de la configuration, **caractérisé en ce que** le robot comprend aussi
• une collerette (24) entourant un premier des deux éléments (2, 8) et reliée au premier élément (8) par l'intermédiaire d'une liaison pivot (25) libre, dans lequel la fixation du film (20) au premier élément (8) est réalisée par l'intermédiaire de la collerette (24).

2. Robot selon la revendication 1, dans lequel la tension du film (20) est sensiblement proportionnelle à la variation de distance (d).

3. Robot selon l'une des revendications précédentes, dans lequel l'articulation (13) est mobile en rotation autour d'un premier axe (X) et dans lequel, un axe de rotation de la liaison pivot (25) reliant la collerette (24) au premier élément (8) est confondu avec le premier axe (X).

4. Robot selon la revendication 3, dans lequel une plage de débattement angulaire de l'articulation (13) autour du premier axe (X) est plus importante qu'une plage de débattement angulaire de la liaison pivot (25) autour du premier axe (X).

5. Robot selon l'une des revendications précédentes, dans lequel l'articulation (13) est mobile en rotation autour d'un premier axe (X) et autour d'un second axe (Y) perpendiculaire au premier axe (X), dans lequel un débattement angulaire de l'articulation (13) autour du premier axe (X) est plus grand qu'un débattement angulaire de l'articulation (13) autour du second axe (Y) et dans lequel un secteur angulaire autour du premier axe (X) occupé par le film (20) entre ses fixations est plus grand qu'un secteur angulaire autour du second axe (Y) occupé par le film (20) entre ses fixations.

6. Robot selon l'une des revendications précédentes, dans lequel le film (20) est précontraint de façon à conserver une tension de part et d'autre de l'articulation (13) sur au moins une partie d'une plage de débattement angulaire de l'articulation (13).

7. Robot selon l'une des revendications précédentes, dans lequel le film (20) est un tissu.

8. Robot selon la revendication 7, dans lequel le tissu (20) comprend une fibre à base de copolymère de polyéther et de polyuréa.

9. Robot selon l'une des revendications 7 ou 8, dans lequel le tissu (20) est respirant.

10. Robot selon l'une des revendications précédentes, dans lequel le film (20) comprend un matériau isolant électrique.

11. Robot selon l'une des revendications précédentes, dans lequel le film (20) comprend un matériau conducteur électrique.

12. Robot selon l'une des revendications précédentes, dans lequel le robot (10, 15) est à caractère humanoïde et comprend un tronc (2) et un bassin (8), l'articulation (13) reliant le tronc (2) et le bassin (8).

## Patentansprüche

1. Roboter, Folgendes umfassend:
• zwei Elemente (2, 8), die untereinander beweglich sind,
• ein Gelenk (13), das mindestens einen Freiheitsgrad aufweist und die beiden Elemente (2, 8) verbindet,
• eine weiche und elastische Folie (20), die das Gelenk (13) umgibt und an jedem der beiden Elemente befestigt ist, wobei die Folie (20) zwischen einem ersten Befestigungspunkt (16) an dem ersten Element (2) und einem zweiten Befestigungspunkt (17) an dem zweiten Element (8) in mindestens einer Konfiguration der beiden Elemente (2, 8) gespannt ist, wobei sich die Spannung der Folie (20) in Abhängigkeit von einer Änderung (Δd) einer Entfernung (d) zwischen den beiden Befestigungspunkten (16, 17) bei Bewegungen des Gelenks (13) um die Konfiguration ändert, **dadurch gekennzeichnet, dass** der Roboter ebenfalls Folgendes umfasst:
• einen Bund (24), der ein erstes der beiden Elemente (2, 8) umgibt und mit dem ersten Element (8) über eine freie Schwenkverbindung (25) verbunden ist, wobei die Befestigung der Folie (20) an dem ersten Element (8) über den Bund (24) erfolgt.

2. Roboter nach Anspruch 1, wobei die Spannung der Folie (20) im Wesentlichen proportional zur Entfernungsänderung (d) ist.

3. Roboter nach einem der vorhergehenden Ansprüche, wobei das Gelenk (13) um eine erste Achse (X) drehbar ist und wobei eine Drehachse der Schwenkverbindung (25), die den Bund (24) mit dem ersten Element (8) verbindet, mit der ersten Achse (X) zusammenfällt.

4. Roboter nach Anspruch 3, wobei ein Winkelauslenkungsbereich des Gelenks (13) um die erste Achse (X) größer ist als ein Winkelauslenkungsbereich der Schwenkverbindung (25) um die erste Achse (X).

5. Roboter nach einem der vorhergehenden Ansprüche, wobei das Gelenk (13) um eine erste Achse (X) und um eine zweite Achse (Y), die senkrecht zur ersten Achse (X) verläuft, drehbar ist, wobei ein Winkelausschlag des Gelenks (13) um die erste Achse (X) größer ist als ein Winkelausschlag des Gelenks (13) um die zweite Achse (Y), und wobei ein Winkelsektor um die erste Achse (X), der von der Folie (20) zwischen ihren Befestigungen eingenommen wird, größer ist als ein Winkelsektor um die zweite Achse (Y), der von der Folie (20) zwischen ihren Befestigungen eingenommen wird.

6. Roboter nach einem der vorhergehenden Ansprüche, wobei die Folie (20) so vorgespannt ist, dass sie eine Spannung auf beiden Seiten des Gelenks (13) über mindestens einen Teil eines Bereichs der Winkelauslenkung des Gelenks (13) beibehält.

7. Roboter nach einem der vorhergehenden Ansprüche, wobei die Folie (20) ein Stoff ist.

8. Roboter nach Anspruch 7, wobei der Stoff (20) eine Faser auf der Basis eines Polyether-Polyurea-Copolymers umfasst.

9. Roboter nach einem der Ansprüche 7 oder 8, wobei der Stoff (20) atmungsaktiv ist.

10. Roboter nach einem der vorhergehenden Ansprüche, wobei die Folie (20) ein elektrisch isolierendes Material umfasst.

11. Roboter nach einem der vorhergehenden Ansprüche, wobei die Folie (20) ein elektrisch leitfähiges Material umfasst.

12. Roboter nach einem der vorhergehenden Ansprüche, wobei der Roboter (10, 15) humanoiden Charakters ist und einen Rumpf (2) und ein Becken (8) umfasst, wobei das Gelenk (13) den Rumpf (2) und das Becken (8) verbindet.

## Claims

1. A robot comprising:
• two elements (2, 8) that are movable with respect to one another,
• a joint (13), having at least one degree of freedom, connecting the two elements (2, 8),
• a flexible and elastic film (20) that surrounds the joint (13) and is fixed to each of the two elements, the film (20) being stretched between a first fixing point (16) on the first element (2) and a second fixing point (17) on the second element (8) in at least one configuration of the two elements (2, 8), the tension in the film (20) varying depending on a variation (Δd) in a distance (d) separating the two fixing points (16, 17) during movements of the joint (13) about the configuration, **characterised in that** the robot also comprises:
• a collar (24) that surrounds a first of the two elements (2, 8) and is connected to the first element (8) by way of a free pivot link (25), wherein the film (20) is fixed to the first element (8) by way of the collar (24).

2. The robot according to claim 1, wherein the tension of the film (20) is substantially proportional to the variation in distance (d).

3. The robot according to one of the preceding claims, wherein the joint (13) is rotatable about a first axis (X), and wherein an axis of rotation of the pivot link (25) connecting the collar (24) to the first element (8) is coincident with the first axis (X).

4. The robot according to claim 3, wherein a range of angular displacement of the joint (13) about the first axis (X) is greater than a range of angular displacement of the pivot link (25) about the first axis (X).

5. The robot according to one of the preceding claims, wherein the joint (13) is rotatable about a first axis (X) and about a second axis (Y) perpendicular to the first axis (X), wherein an angular displacement of the joint (13) about the first axis (X) is greater than an angular displacement of the joint (13) about the second axis (Y), and wherein an angular sector about the first axis (X) that is taken up by the film (20) between its fixations is greater than an angular sector about the second axis (Y) that is taken up by the film (20) between its fixations.

6. The robot according to one of the preceding claims, wherein the film (20) is biased so as to maintain tension on either side of the joint (13) over at least a part of a range of angular displacement of the joint (13).

7. The robot according to one of the preceding claims, wherein the film (20) is a fabric.

8. The robot according to claim 7, wherein the fabric (20) comprises a fibre based on a polyether-polyurea copolymer.

9. The robot according to one of claim 7 or 8, wherein the fabric (20) is breathable.

10. The robot according to one of the preceding claims, wherein the film (20) comprises an electrically insulating material.

11. The robot according to one of the preceding claims, wherein the film (20) comprises an electrically conducting material.

12. The robot according to one of the preceding claims, wherein the robot (10, 15) is a humanoid robot and comprises a torso (2) and a pelvis (8), the joint (13) connecting the torso (2) and the pelvis (8).
